# EUROPEAN PATENT SPECIFICATION

(11) **EP 2 904 689 B1**
(45) Date of publication and mention of the grant of the patent: **30.11.2022**
(21) Application number: 13843748.8
(22) Date of filing: 07.10.2013
(51) Int. Cl.: C25B 15/033, C25B 9/75, C25B 9/65, C25B 11/036, H02M 3/155, H02M 7/217, C25B 15/00

(54) **TRANSFORMERLESS ON-SITE GENERATION**
TRANSFORMATORLOSE STROMERZEUGUNG
GÉNÉRATION SUR SITE SANS TRANSFORMATEUR

(30) Priority: 05.10.2012 US 201261710468 P
(43) Date of publication of application: 12.08.2015
(73) Proprietor: De Nora Holdings US, Inc., Concord, OH 44077 (US)
(72) Inventor: SHOWALTER, Geofrey, Moriarty, NM 87036 (US); SANCHEZ, Justin, Albuquerque, NM 87122 (US)
(74) Representative: Reitstötter Kinzebach
(86) International application number: PCT/US2013/063743
(87) International publication number: WO 2014/055992

(56) References cited:
- JP-A- 2011 249 161
- US-A- 4 085 028
- US-A- 4 100 052
- US-A- 4 235 694
- US-A- 4 248 690
- US-A- 4 316 787
- US-A- 4 395 675
- US-A- 4 424 105
- US-A1- 2005 224 339
- US-A1- 2007 047 277
- US-A1- 2007 108 040
- US-A1- 2009 229 992
- US-A1- 2012 025 618
- US-B1- 6 198 257
- US-B1- 6 217 741
- US-B1- 6 217 741

## Description

### BACKGROUND OF THE INVENTION

### Field of the Invention (Technical Field):

The present invention is apparatus and configuration for providing power to one or more electrolytic cells without requiring a large transformer to take incoming AC voltage to a lower DC voltage. This innovation is a substantial cost and footprint improvement over other electrolytic cell designs.

### Background Art:

Electrolytic cells of either mono-polar or bi-polar configuration for on-site generation (OSG) of oxidants are typically arranged in electrically parallel configurations. Voltages used for a mono-polar cell typically vary from 3.5 - 6.0 Volts plate to plate. Bipolar electrolytic cells often have somewhat higher voltages, but they are typically run at DC voltages of 9.0 - 42.0 Volts. A switching DC power supply, or transformer coupled with other devices (diodes, SCRs, capacitors, etc) is typically used to take the available incoming AC voltage(s) (for example 1 10V, 220V, 400V, 480V, 600V) to provide a constant, lower DC voltage at the cell. This methodology/apparatus of stepping down the voltage has substantial disadvantages. The cost of goods sold (COGS) associated with the step down voltage apparatus are typically a substantial part of the overall cost of the on-site generator (often 10-50%). Stepping down voltage also results in substantial power losses, increasing the operating cost of generating oxidants or other chemicals on-site and creating more heat, which must somehow be dealt with by cooling fans, etc.
Lastly, the footprint and weight associated with the apparatus used to step down the voltage is a substantial part of the overall footprint and weight (typically 10-45%).
US 4085028 A describes an apparatus for electrolyzing a dilute aqueous brine solution for the electrochemical preparation of hypochlorites or chlorine from dilute water solutions of chlorides comprising a full-wave bridge rectifier adapted to be electrically connected directly to a source of alternating current and an electrode assembly connected across said rectifier comprising a negative electrode, a positive electrode, and one or more bipolar electrodes.

### SUMMARY OF THE INVENTION (DISCLOSURE OF THE INVENTION)

An embodiment of the present invention is an apparatus as defined in claim 1. The apparatus comprises one or more electrolytic cells comprising a number of intermediate electrodes sufficient to enable the apparatus to operate within only a percentage of a rectified line voltage while maintaining a desired plate to plate voltage between adjacent intermediate electrodes, the apparatus not comprising a transformer. The apparatus comprises voltage regulation provided by a buck converter circuit or a boost converter circuit. The voltage regulation can vary a voltage across the one or more electrolytic cells up to approximately twenty percent of the rectified line voltage. If more than one electrolytic cells are used, they are preferably connected in series. The apparatus further comprises a plurality of contactors in an H-bridge configuration for reversing the polarity of the one or more electrolytic cells in order to enable self-cleaning of the one or more electrolytic cells.

Another embodiment of the present invention is a method for performing electrolysis as defined in claim 4, the method comprising rectifying incoming line voltage; providing one or more electrolytic cells comprising a number of intermediate electrodes sufficient to enable the one or more electrolytic cells to operate within only a percentage of a rectified line voltage while maintaining a desired plate to plate voltage between adjacent intermediate electrodes; and varying the rectified line voltage without using a transformer. Varying the rectified line voltage is performed using a buck converter circuit or a boost converter circuit. Varying the rectified line voltage preferably comprises varying a voltage across the one or more electrolytic cells up to approximately twenty percent of the rectified line voltage. Varying the rectified line voltage optionally accommodates fluctuations in the incoming line voltage or changes the chemical products, for example the quantity of hydrogen and hypochlorite to hydrogen peroxide ratio, produced by the one or more electrolytic cells. Varying the rectified line voltage optionally comprises accommodating a varying conductivity of electrolyte, such as that produced by fluctuations in salinity and/or temperature of seawater. If a plurality of cells is used, the method preferably comprises connecting them in series. The method further comprises reversing the polarity of the one or more electrolytic cells using a plurality of contactors in an H-bridge configuration, thereby self-cleaning the one or more electrolytic cells. Varying the rectified line voltage using a boost converter circuit preferably comprises harvesting energy from a low voltage power source or matching a solar array output to a desired voltage across the one or more electrolytic cells.

Objects, advantages and novel features, and further scope of applicability of the present invention will be set forth in part in the detailed description to follow, taken in conjunction with the accompanying drawings, and in part will become apparent to those skilled in the art upon examination of the following, or may be learned by practice of the invention. The objects and advantages of the invention may be realized and attained by means of the instrumentalities and combinations particularly pointed out in the appended claims.

### BRIEF DESCRIPTION OF THE DRAWINGS

The accompanying drawings, which are incorporated into and form a part of the specification, illustrate an embodiment of the present invention and, together with the description, serves to explain the principles of the invention. The drawings are only for the purpose of illustrating various embodiments of the invention and are not to be construed as limiting the invention. In the drawings:
FIG. 1 is a circuit diagram of an embodiment of the present invention.
FIG. 2 is a circuit diagram of the embodiment of FIG. 1 also comprising a filter capacitor.
FIG. 3 is a circuit diagram of the embodiment of FIG. 2 further comprising an H-bridge circuit to perform reverse polarity cleaning of the cell or cells.
FIG. 4 is a circuit diagram of the embodiment of FIG. 3 further comprising a buck converter.
FIG. 5 is a circuit diagram of the embodiment of FIG. 3 further comprising a boost converter.

### DETAILED DESCRIPTION OF EMBODIMENTS OF THE INVENTION

Embodiments of the invention are methods and apparatuses to provide power to one or more electrolytic cells. The apparatuses take an incoming power of one type and convert it to power suitable to drive a bank or line of electrolytic cells arranged electrically in series and/or a single large bi-polar electrolytic cell designed to handle the high voltages.

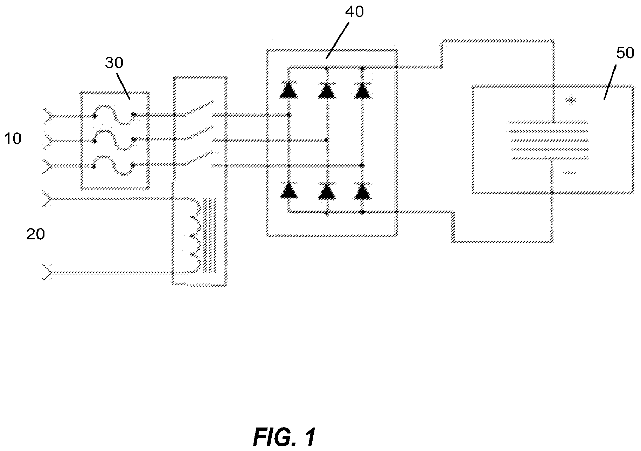

In the simple embodiment (not according to the present invention) shown in FIG. 1, incoming AC power 10 is passed through fuse 30 and, via contactor control 20, diode rectifier 40 and is then applied to a bipolar cell or a plurality of electrolytic cells 50, the latter preferably arranged in series, which typically cannot use conventional AC power directly. The diode rectifier turns the alternating current (AC) into a wavy direct current (DC). The effective DC voltage on the cell or cell line is approximately 1.4 ^{×} VAC. Thus, for multiple cells, N electrolytic cells designed to operate at 1/N ^{×} (1 .4 ^{×} VAC), each with plate to plate voltages between intermediate electrodes from 3.5-7V, are preferably arranged electrically in series allowing for elimination of the transformer.

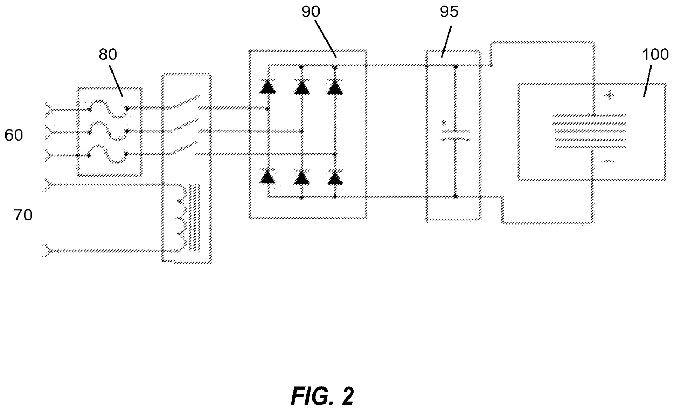

FIG. 2 is a similar embodiment (not according to the present invention), in which incoming AC power 60 is passed through fuse 80, diode rectifier 90 via contactor control 70, and filter capacitor 95, which smoothes out the wavy DC voltage, which is then applied to a bipolar cell or a plurality of electrolytic cells 100.

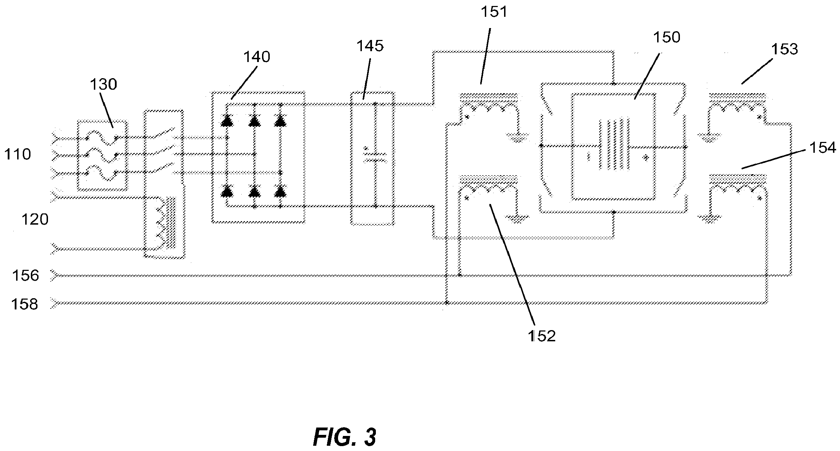

FIG. 3 is a schematic of another embodiment (not according to the present invention) that comprises contactors (i.e. switches and/or relays) arranged in an H-bridge configuration to reverse the polarity to clean the electrolytic cells (preferably for a short time and/or at lower currents). Incoming AC power 110 is passed through fuse 130 diode rectifier 140 via contactor control 120, and filter capacitor 145, and is then applied to a bipolar cell or a plurality of electrolytic cells 150. Relays 151, 152, 153, 154 are preferably arranged in an H-bridge configuration and are controlled by forward polarity signal 156 and reverse polarity signal 158.

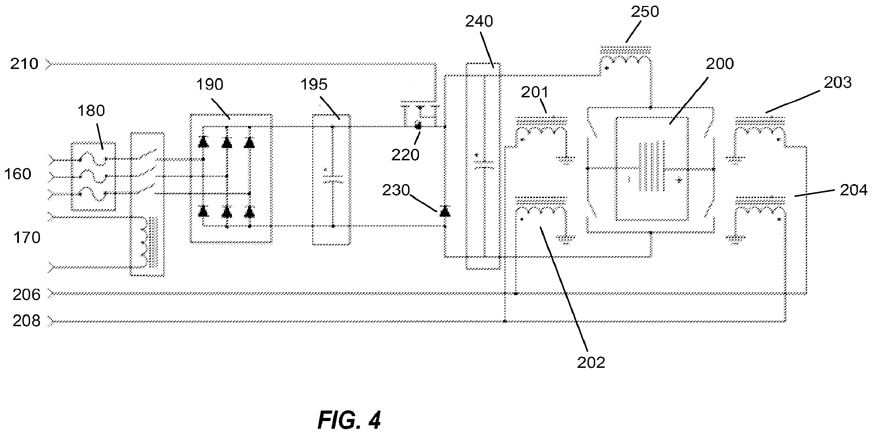

The circuit in FIG. 4 of an embodiment according to the invention uses a buck converter in addition to the configuration of FIG. 3. Incoming AC power 160 is passed through fuse 180 diode rectifier 190 via contactor control 170, and filter capacitor 195, and is then applied to a bipolar cell or a plurality of electrolytic cells 200. Relays 201, 202, 203, 204 are arranged in an H-bridge configuration and are controlled by forward polarity signal 206 and reverse polarity signal 208. The buck converter, by means of altering the Pulse Width Modulation (PWM) signal 210 of MOSFET switch 220 provides an efficient way to step the voltage down from the rectified mains. Buck converter also preferably comprises diode 230, filter capacitor 240, and inductor 250.

Using a buck converter or similar circuit has certain advantages over using a transformer to step down voltage, as is typical for existing systems. First, a voltage can be selected that is appropriate for the electro- chemistry required by the user. That is, by using different electrode to electrode voltages, different chemistries can be achieved. For example, hydrogen production can be increased or decreased, or hypochlorite production can be favored over hydrogen peroxide (or vice versa).

Second, the present invention can more easily compensate for the different mains voltages found throughout the world. Manufacturing industrial equipment for the international market requires the equipment to utilize different AC mains voltages. Three phase power throughout the world can be any of 208, 220, 230, 240, 346, 380, 400, 415, 480, 600, or 690 VAC at 50-60 Hz. Normally this requires special transformers designed for a specific range of voltages or step up/down transformers used in conjunction with a standard transformer designed for operation of the cell line at a specific set voltage. A typical example is that of a transformer primary designed to utilize 480 VAC mains and a rectified secondary that produces 42 VDC. If this transformer were to be connected to a 380 VAC main the rectified output would be 33.3 VDC, which would be too low to drive the cell line. A step up transformer of at least the same power rating and approximately the size would be required to be installed at the site in addition to the standard system. This can substantially increase the overall cost and footprint of the installed system. There is also a decrease in overall power efficiency due to coupling losses of two transformers.

Third, if sea water is used as the sole brine feedstock to the system, the power supply must adjust to the conductivity of the sea water dynamically, since the conductivity of seawater varies by salinity and temperature and is not constant. The buck configuration can use current feedback instead of voltage and thus become a constant current source instead. This is difficult or impossible to implement using transformers.

Because a transformerless circuit, such as one comprising a buck converter, cannot typically step down more than 100% of the rectified line voltage (and typically less, such as less than 80%, less than 50%, less than 25%, or even less than 20%), the electrolytic cell or cells are designed to accommodate close to the rectified line voltage without any voltage regulation. In other words, the cell or cells are configured with the number of intermediate electrodes that enable the system to operate with voltage regulation of exactly, or alternatively only a percentage of, the rectified line voltage to operate at the desired plate to plate voltage in each cell. This typically means the cell or cells operate at a much higher overall voltage than typical cells in the art, and typically comprise a larger number of intermediate electrodes in order to achieve the desired plate to plate voltage. For multiple cells this is easier to accomplish when the cells are arranged in series rather than in parallel.

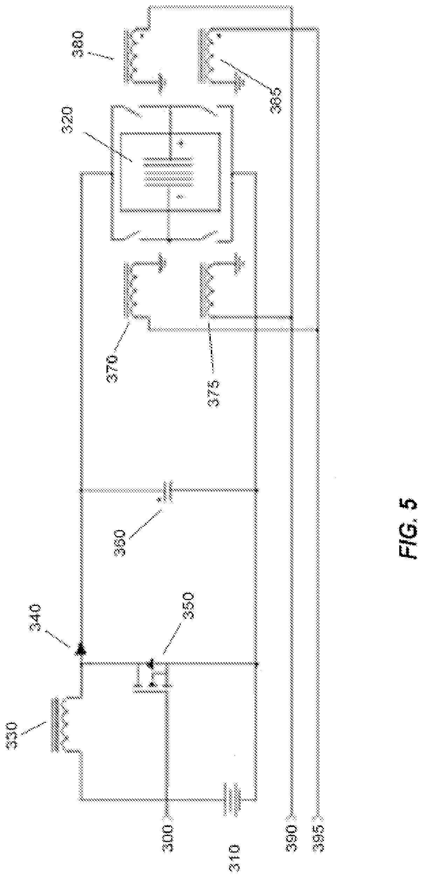

Another embodiment (not according to the invention) is shown in FIG. 5. A boost converter is used to step up a lower voltage from battery 310 to a voltage suitable to drive a cell (preferably bipolar) or cell line 320. The boost converter preferably is operated via PWM signal 300 and comprises inductor 330, diode 340, and Mosfet 350. Optional filter capacitor 360 smoothes out the voltage. Relays 370, 375, 380, 385 are preferably arranged in an H-bridge configuration and are controlled by forward polarity signal 390 and reverse polarity signal 395. This configuration provides a way to harvest energy from, for example, just a few solar cells or small human powered generators that can be used to power small portable water treatment equipment. This configuration can also be used to optimize larger off the grid applications that utilize photovoltaic energy generation by better matching the output of solar array to the required cell line.

### Example

A single mono-polar (two electrodes) cell capable of producing five pounds of chlorine a day with a cell voltage of 5 volts required a cell current of 100 amps. In Table 1, a five pound system is scaled up in three different configurations to produce 675 pounds of chlorine a day with a 480 volt three phase input (VAC). Thus the rectified line voltage was approximately 672 V. The plate to plate voltage for each configuration was 5 volts. The first two configurations use conventional methods. The last one uses a series cell approach (the cells are connected in series) that is matched to the incoming power available. In this case if N = 3 then we would have three electrolytic cells in the cell line, each with 45 chambers.

**Table 1**

| **Cell Configuration** | **Incoming Power (Kilowatts)** | **Cell Voltage** (**VDC**) | **Cell Current (Amps)** | **Diode Losses (%)** | **Transformer Loss (%)** | **Transformer Weight (Pounds)** | **Cell Bus Bar Size** (**sq inch**) |
|---|---|---|---|---|---|---|---|
| Single Parallel Primary Cell | 108.9 | 5 | 13500 | 23 | 15 | 1330 | 13.5 |
| Series Parallel | 865 | 40 | 1688 | 7 | 15 | 1057 | 1.7 |
| Series | 67.8 | 675 | 100 | .5 | 0 | 0 | 0.1 |

Although the invention has been described in detail with particular reference to the disclosed embodiments, other embodiments can achieve the same results.

## Claims

1. An apparatus for on-site generation of oxidant, the apparatus being configured to be operated with a three phase power of 208, 220, 230, 240, 346, 380, 400, 415, 480, 600 or 690 V of alternating current at 50-60 Hz, the apparatus comprising one or more electrolytic cells comprising a number of intermediate electrodes sufficient to enable the apparatus to:
operate within only a percentage of a rectified line voltage while maintaining a desired plate to plate voltage between adjacent intermediate electrodes in the range from 3.5 - 7 V, the apparatus comprising voltage regulation provided by a buck converter circuit or a boost converter circuit, wherein said voltage regulation can vary a voltage across said one or more electrolytic cells up to approximately twenty percent of the rectified line voltage;
said apparatus not comprising a transformer,
said apparatus further comprising a plurality of contactors in an H-bridge configuration for reversing the polarity of said one or more electrolytic cells in order to enable self-cleaning of said one or more electrolytic cells.

2. The apparatus of claim 1 wherein comprising a plurality of electrolytic cells is connected in series.

3. The apparatus of any one of the preceding claims wherein the oxidant is chlorine and the plate to plate voltage is 5.0 V.

4. A method for performing electrolysis for on-site generation of oxidant, the method comprising:
rectifying incoming line voltage, the incoming line voltage being a three phase power of 208, 220, 230, 240, 346, 380, 400, 415, 480, 600 or 690 V of alternating current at 50-60 Hz,
providing one or more electrolytic cells comprising a number of intermediate electrodes sufficient to enable the one or more electrolytic cells to:
operate within only a percentage of a the rectified line voltage while maintaining a desired plate to plate voltage between adjacent intermediate electrodes in the range from 3.5 - 7 V; and varying the rectified line voltage, wherein varying the rectified line voltage is performed using a buck converter circuit or a boost converter circuit;
said method not using a transformer;
said method further comprising reversing the polarity of the one or more electrolytic cells using a plurality of contactors in an H-bridge configuration, thereby self-cleaning the one or more electrolytic cells, controlled by forward polarity and reverse polarity signals.

5. The method of claim 4, wherein the oxidant is chlorine and the plate to plate voltage is 5.0 V.

6. The method of any one of claims 4 or 5, wherein a plurality of electrolytic cells are connected in series.

## Patentansprüche

1. Vorrichtung zur Vor-Ort-Erzeugung eines Oxidationsmittels, wobei die Vorrichtung so ausgelegt ist, dass sie mit einer dreiphasigen Wechselspannung von 208, 220, 230, 240, 346, 380, 400, 415, 480, 600 oder 690 V eines Wechselstroms bei 50 - 60 Hz betrieben werden kann, wobei die Vorrichtung eine oder mehrere Elektrolysezellen umfasst, die eine Anzahl von Zwischenelektroden umfassen, die ausreicht, um die Vorrichtung zu befähigen:
innerhalb nur eines Prozentsatzes einer gleichgerichteten Netzspannung zu arbeiten, während eine gewünschte Platte-zu-Platte-Spannung zwischen benachbarten Zwischenelektroden im Bereich von 3,5 - 7 V aufrechterhalten wird, wobei die Vorrichtung eine Spannungsregelung umfasst, die durch eine Abwärtswandlerschaltung oder eine Aufwärtswandlerschaltung bereitgestellt wird, wobei die Spannungsregelung eine Spannung über die eine oder mehreren Elektrolysezellen bis hinauf zu etwa 20 % der gleichgerichteten Netzspannung variieren kann;
wobei die Vorrichtung keinen Transformator umfasst,
wobei die Vorrichtung außerdem eine Vielzahl von Schützen in einer H-Brücken-Anordnung zum Umkehren der Polarität der einen oder mehreren Elektrolysezellen umfasst, um die Selbstreinigung der einen oder mehreren Elektrolysezellen zu ermöglichen.

2. Vorrichtung gemäß Anspruch 1, welche eine Vielzahl von in Reihe geschalteten Elektrolysezellen umfasst.

3. Vorrichtung gemäß einem der vorhergehenden Ansprüche, wobei das Oxidationsmittel Chlor ist und die Spannung von Platte zu Platte 5,0 V beträgt.

4. Verfahren zur Durchführung einer Elektrolyse zur Vor-Ort-Erzeugung eines Oxidationsmittels, wobei das Verfahren umfasst:
Gleichrichten einer ankommenden Netzspannung, wobei die ankommende Netzspannung eine 3-Phasen-Leistung von 208, 220, 230, 240, 346, 380, 400, 415, 480, 600 oder 690 V eines Wechselstroms bei 50 - 60 Hz ist,
Bereitstellen einer oder mehrerer Elektrolysezellen, die eine Anzahl Zwischenelektroden umfasst, die ausreicht, die eine oder mehrere Elektrolysezellen in die Lage zu versetzen:
innerhalb nur eines Prozentsatzes der gleichgerichteten Netzspannung zu arbeiten, während eine gewünschte Platte-zu-Platte-Spannung zwischen benachbarten Zwischenelektroden im Bereich von 3,5 - 7 V aufrechterhalten wird; und die gleichgerichtete Netzspannung zu variieren, wobei das Variieren der gleichgerichteten Netzspannung unter Verwendung einer Abwärtswandlerschaltung oder einer Aufwärtswandlerschaltung durchgeführt wird;
wobei das Verfahren keinen Transformator verwendet;
wobei das Verfahren außerdem das Umkehren der Polarität der einen oder mehreren Elektrolysezellen unter Verwendung von Schützen in einer H-Brücken-Anordnung umfasst, gesteuert durch Vorwärtspolaritäts- und Rückwärtspolaritätssignale, und eine Selbstreinigung der einen oder mehreren Elektrolysezellen durchgeführt wird.

5. Verfahren gemäß Anspruch 4, wobei das Oxidationsmittel Chlor ist und die Spannung von Platte zu Platte 5,0 V beträgt.

6. Verfahren nach einem der Ansprüche 4 oder 5, wobei mehrere Elektrolysezellen in Reihe geschaltet sind.

## Revendications

1. Appareil pour une génération sur site d'un oxydant, l'appareil étant configuré pour fonctionner avec une alimentation électrique triphasée de 208, 220, 230, 240, 346, 380, 400, 415, 480, 600 ou 690 V de courant alternatif entre 50 et 60 Hz, l'appareil comprenant une ou plusieurs cellules électrolytiques comprenant un nombre d'électrodes intermédiaires suffisant pour permettre à l'appareil de :
fonctionner uniquement dans un pourcentage d'une tension de ligne redressée tout en maintenant une tension de plaque à plaque souhaitée entre des électrodes intermédiaires adjacentes dans la plage de 3,5 à 7 V, l'appareil comprenant une régulation de tension fournie par un circuit convertisseur abaisseur ou un circuit convertisseur élévateur, dans lequel ladite régulation de tension peut faire varier une tension aux bornes desdites une ou plusieurs cellules électrolytiques jusqu'à environ vingt pour cent de la tension de ligne redressée ;
ledit appareil ne comprenant pas de transformateur,
ledit appareil comprenant en outre une pluralité de contacteurs dans une configuration en pont en H pour inverser la polarité desdites une ou plusieurs cellules électrolytiques afin de permettre un auto-nettoyage desdites une ou plusieurs cellules électrolytiques.

2. Appareil selon la revendication 1, comprenant une pluralité de cellules électrolytiques connectées en série.

3. Appareil selon l'une quelconque des revendications précédentes, dans lequel l'oxydant est le chlore et la tension de plaque à plaque est de 5,0 V.

4. Procédé de réalisation d'une électrolyse pour une génération sur site d'un oxydant, le procédé comprenant les étapes :
redresser une tension de ligne entrante, la tension de ligne entrante étant une alimentation électrique triphasée de 208, 220, 230, 240, 346, 380, 400, 415, 480, 600 ou 690 V de courant alternatif entre 50 et 60 Hz,
fournir une ou plusieurs cellules électrolytiques comprenant un nombre d'électrodes intermédiaires suffisant pour permettre aux une ou plusieurs cellules électrolytiques de :
fonctionner uniquement dans un pourcentage de la tension de ligne redressée tout en maintenant une tension de plaque à plaque souhaitée entre des électrodes intermédiaires adjacentes dans la plage de 3,5 à 7 V ; et faire varier la tension de ligne redressée, la variation de la tension de ligne redressée étant effectuée à l'aide d'un circuit de convertisseur abaisseur ou d'un circuit de convertisseur élévateur ;
ledit procédé n'utilisant pas de transformateur ;
ledit procédé comprend en outre une inversion de la polarité des une ou plusieurs cellules électrolytiques à l'aide d'une pluralité de contacteurs dans une configuration de pont en H, en auto-nettoyant ainsi les une ou plusieurs cellules électrolytiques, sous la commande de signaux de polarité directe et de polarité inverse.

5. Procédé selon la revendication 4, dans lequel l'oxydant est le chlore et la tension de plaque à plaque est de 5,0 V.

6. Procédé selon l'une quelconque des revendications 4 ou 5, dans lequel une pluralité de cellules électrolytiques sont connectées en série.
